(19) Europäisches Patentamt
European Patent Office
Office européen des brevets

(11) EP 4 800 763 A1

(12) **EUROPEAN PATENT APPLICATION**
published in accordance with Art. 153(4) EPC

(43) Date of publication:
**02.09.2026 Bulletin 2026/36**

(21) Application number: **24882400.5**

(22) Date of filing: **22.10.2024**

(51) International Patent Classification (IPC):
***H01M 4/38*** *(2006.01)* ***H01M 4/134*** *(2010.01)*
***H01M 4/36*** *(2006.01)* ***H01M 4/58*** *(2010.01)*

(52) Cooperative Patent Classification (CPC):
**H01M 4/134; H01M 4/36; H01M 4/38; H01M 4/58;**
Y02E 60/10

(86) International application number:
**PCT/JP2024/037640**

(87) International publication number:
**WO 2025/089289 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.10.2023 JP 2023184008**

(71) Applicant: **Panasonic Intellectual Property Management Co., Ltd.**
**Kadoma-shi, Osaka 571-0057 (JP)**

(72) Inventor: **SAITO, Yusuke**
**Kadoma-shi, Osaka 571-0057 (JP)**

(74) Representative: **Novagraaf International SA**
**Chemin de l'Echo 3**
**1213 Onex, Geneva (CH)**

(54) **NEGATIVE ELECTRODE ACTIVE MATERIAL AND SECONDARY BATTERY**

(57) A negative electrode active material according to the present disclosure includes a composite particle 10, the composite particle 10 including a matrix 1 and Si-B-containing particles 2, wherein the Si-B-containing particles 2 are dispersed in the matrix 1. A secondary battery 100 according to the present disclosure includes a negative electrode 26 including the negative electrode active material according to the present disclosure, a positive electrode 23, and an electrolyte.

10
2
1
3

FIG.1

EP 4 800 763 A1

## Description

### TECHNICAL FIELD

The present disclosure relates to a negative electrode active material and a secondary battery.

### BACKGROUND ART

Secondary batteries such as nonaqueous electrolyte secondary batteries have recently been expected as power sources for small consumer applications, power storage devices, and electric vehicles because such secondary batteries have a high voltage and a high energy density. With increasing demand for higher energy density of batteries, use of a material containing silicon, which can form an alloy with lithium, is expected as a negative electrode active material having a high theoretical capacity density.

Patent Literature 1 discloses a negative electrode active material including a silicate composite particle, the silicate composite particle including a lithium silicate phase and silicon particles dispersed in the lithium silicate phase, wherein the silicon particles contain at least one element selected from the group consisting of germanium and aluminum.

### CITATION LIST

#### Patent Literature

Patent Literature 1: WO 2021/153078

### SUMMARY OF INVENTION

#### Technical Problem

The present disclosure provides a negative electrode active material that can enhance the charge capacity of a battery.

#### Solution to Problem

The negative electrode active material of the present disclosure includes a composite particle, the composite particle including:

a matrix; and
Si-B-containing particles, wherein
the Si-B-containing particles are dispersed in the matrix.

#### Advantageous Effects of Invention

According to the technique of the present disclosure, it is possible to provide a negative electrode active material that can enhance the charge capacity of a battery.

### BRIEF DESCRIPTION OF DRAWINGS

FIG. 1 is a cross-sectional view schematically showing the configuration of a composite particle 10 included in a negative electrode active material according to Embodiment 1.
FIG. 2 is a cross-sectional view schematically showing the configuration of a secondary battery according to Embodiment 2.
FIG. 3 is a graph showing the X-ray diffraction patterns of composite particles of Example 1 and Comparative Example 1.
FIG. 4 is a partially enlarged graph of the X-ray diffraction patterns of the composite particles of Example 1 and Comparative Example 1.

## DESCRIPTION OF EMBODIMENTS

Embodiments of the present disclosure are described in detail below with reference to the drawings. The present disclosure is not limited to the following embodiments.

(Embodiment 1)

A negative electrode active material according to Embodiment 1 includes a composite particle, the composite particle including a matrix and Si-B-containing particles.

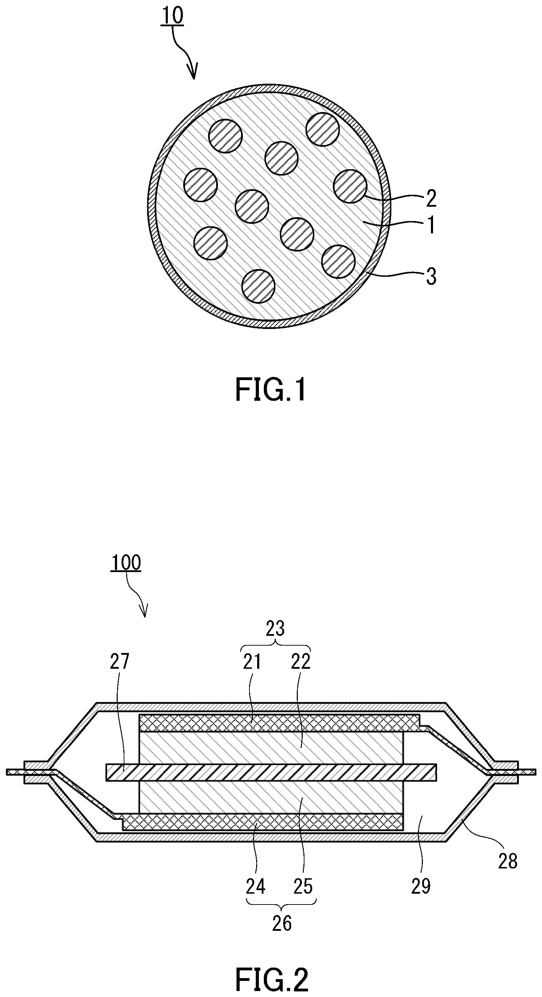

FIG. 1 is a cross-sectional view schematically showing the configuration of a composite particle 10 included in the negative electrode active material according to Embodiment 1. The composite particle 10 is a particle including a matrix 1 and Si-B-containing particles 2 dispersed in the matrix 1.

The Si-B-containing particles 2 are particles containing the element silicon (Si) and the element boron (B). The Si-B-containing particles 2 are, for example, silicon particles containing B. Because the Si-B-containing particles 2 contain B, the Si-B-containing particles 2 exhibit enhanced electronic conductivity and a reduced volume resistivity (powder resistivity) as compared with silicon particles free of B. That is, in the composite particle 10, silicon particles having enhanced electronic conductivity are dispersed in the matrix 1. With the above configuration, the charge capacity and discharge capacity of a battery can be enhanced.

The Si-B-containing particles 2 contain, for example, 90 at% or more of silicon. The Si-B-containing particles 2 may include a phase of elemental silicon (Si).

In the Si-B-containing particles 2, B may be located within the Si-B-containing particles 2, and may be located on the surfaces of the Si-B-containing particles 2. For example, B may be dispersed within silicon particles, and may be located on the surfaces of silicon particles.

In the Si-B-containing particles 2, B may be contained in any form, such as the form of atoms, an elemental form, or the form of compounds.

B may be dispersed in the Si-B-containing particles 2.

In the Si-B-containing particles 2, at least a portion of B may be substituted for silicon at, or inserted into, silicon crystal lattice sites in the form of B atoms, and may be substituted for silicon at silicon crystal lattice sites in the form of B atoms. The Si-B-containing particles 2 may include crystalline silicon in which B atoms are dissolved to form a solid solution. That is, in the Si-B-containing particles 2, at least a portion of B may be B atoms dissolved in crystalline silicon to form a solid solution. With the above configuration, the charge capacity and discharge capacity of a battery can be enhanced. Furthermore, cracking and fracturing of the composite particle 10 can also be reduced.

The Si-B-containing particles 2 may include at least one selected from the group consisting of a boron oxide and elemental B. The Si-B-containing particles 2 may include a boron oxide. The Si-B-containing particles 2 may include B atoms dissolved in crystalline silicon to form a solid solution, a boron oxide, and elemental B, and may include B atoms dissolved in crystalline silicon to form a solid solution and a boron oxide. The boron oxide may be dispersed within silicon particles, and may be located on the surfaces of silicon particles.

The Si-B-containing particles 2 may include a crystalline phase. For example, the Si-B-containing particles 2 may include crystalline silicon, as described above. As used herein, the phrase "the Si-B-containing particles 2 include crystalline silicon" means that, in an X-ray diffraction pattern obtained by X-ray diffraction measurement of the composite particles 10 using Cu-K$\alpha$ radiation, a peak derived from the Si(111) plane is observed. The X-ray diffraction peak derived from the Si(111) plane is, for example, an X-ray diffraction peak having the highest intensity within a diffraction angle 2$\theta$ range from 28.0° to 28.7°.

The X-ray diffraction pattern of the composite particles 10 can be obtained by $\theta$-2$\theta$ X-ray diffraction measurement using Cu-K$\alpha$ radiation having wavelengths of 1.5405 Å and 1.5444 Å, that is, wavelengths of 0.15405 nm and 0.15444 nm.

As used herein, a peak refers to a projecting portion having an SN ratio (i.e., the ratio of a signal S to background noise N) of 1.3 or more and a full width at half maximum of 10° or less.

In the X-ray diffraction pattern obtained by X-ray diffraction measurement of the composite particles 10 using Cu-K$\alpha$ radiation, an X-ray diffraction peak derived from the Si(111) plane may be present, for example, within a diffraction angle 2$\theta$ range from 28.42° to 28.57°. The phrase "an X-ray diffraction peak derived from the Si(111) plane is present within a diffraction angle 2$\theta$ range from 28.42° to 28.57°" means that the peak top of the X-ray diffraction peak derived from the Si(111) plane is observed within the diffraction angle 2$\theta$ range from 28.42° to 28.57°.

The diffraction angle of a peak in an X-ray diffraction pattern is defined as an angle at which the maximum intensity is observed in a projecting portion having an SN ratio of 1.3 or more and a full width at half maximum of 10° or less. The full width at half maximum refers to the width represented by the difference between two diffraction angles at which the intensity of an X-ray diffraction peak is half of a maximum intensity $I_{MAX}$ of the X-ray diffraction peak.

The Si-B-containing particles 2 may include an amorphous phase.

The Si-B-containing particles 2 may include a crystalline portion and an amorphous portion. The amorphous

portion may be derived from B, and may be derived from Si.

The percentage of B in the Si-B-containing particles 2 may be 0.01 mass% or more and 5.0 mass% or less, 0.01 mass% or more and 3.0 mass% or less, or 0.01 mass% or more and 1.0 mass% or less. The percentage of B in the Si-B-containing particles 2 may be 0.05 mass% or more, 0.1 mass% or more, or 1 mass% or more.

The mass percentage of B in the Si-B-containing particles 2 can be measured, for example, by inductively coupled plasma atomic emission spectrometry (ICP-AES).

The average particle diameter of the Si-B-containing particles 2 may be 1 nm or more and 1000 nm or less, 1 nm or more and 100 nm or less, or 25 nm or more and 65 nm or less. Such fine Si-B-containing particles 2 have a small volume change during charging and discharging, and thus can enhance the structural stability of the composite particle 10. Accordingly, the charge capacity and discharge capacity of a battery can be enhanced.

The average particle diameter of the Si-B-containing particles 2 can be determined from an SEM image obtained by scanning electron microscope (SEM) observation of a cross section of the negative electrode active material (composite particle 10). That is, the average particle diameter of the Si-B-containing particles 2 can be measured from a cross-sectional SEM image of the composite particle 10 in which cross sections of the Si-B-containing particles 2 are exposed. The average particle diameter can be determined by measuring the particle diameters of 500 Si-B-containing particles 2 randomly extracted from the SEM image of the composite particle 10 and calculating the median diameter thereof. Here, the maximum Feret diameter of each Si-B-containing particle 2 in the obtained SEM image can be regarded as the particle diameter of the Si-B-containing particle 2. The "maximum Feret diameter" is the maximum length of a perpendicular line obtained between two parallel lines sandwiching the particle.

The median of the number-based distribution of the particle diameters of the 500 Si-B-containing particles 2 measured by SEM observation is regarded as the median diameter of the Si-B-containing particles 2.

The ratio of the mass of Si contained in the Si-B-containing particles 2 to the mass of the composite particle 10 may be 20 mass% or more and 80 mass% or less, 20 mass% or more and 75 mass% or less, 40 mass% or more and 70 mass% or less, or 50 mass% or more and 66 mass% or less.

The ratio of the mass of Si contained in the Si-B-containing particles 2 to the mass of the composite particle 10 can be measured by ICP and NMR.

To increase capacity and enhance cycle characteristics, the content of the Si-B-containing particles 2 in the composite particle 10 may be 30 mass% or more and 80 mass% or less. When the content of the Si-B-containing particles 2 is 30 mass% or more, the proportion of the matrix 1 decreases, and thus initial charge and discharge efficiency tends to be enhanced. When the content of the Si-B-containing particles 2 is 80 mass% or less, the degree of expansion and contraction of the composite particle 10 during charging and discharging tends to be reduced. The content of the Si-B-containing particles 2 in the composite particle 10 may be 40 mass% or more, 50 mass% or more, or 60 mass% or more.

The matrix 1 can be, for example, at least one selected from the group consisting of a silicon compound phase, a carbon phase, and a metal-containing oxide phase. The matrix 1 may be at least one selected from the group consisting of a silicon compound phase and a carbon phase.

The silicon compound phase includes at least one selected from the group consisting of a silicate phase and a silicon oxide phase.

The silicon oxide phase is a phase consisting of a compound of Si and O. The silicon oxide phase may include silicon dioxide ($SiO_2$). A main component of the silicon oxide phase may be $SiO_2$. $SiO_2$ may account for, for example, 50 mass% or more, or 95 mass% or more, of the silicon oxide phase.

The silicon compound phase may include a silicate phase. The silicate phase is a phase including a compound (silicate) containing a metal element M1, silicon (Si), and O. The metal element M1 may include at least one selected from the group consisting of an alkali metal element and a Group 2 element in the periodic table. The metal element M1 may be at least one selected from the group consisting of Li, K, Na, Cs, Mg, Ca, Sr, and Ba.

The silicate phase may include Li as the metal element M1. That is, the silicon compound phase may include a lithium silicate containing Li, Si, and O. Lithium silicate has excellent lithium-ion conductivity.

In the silicon compound phase, the proportion of Li to metal elements other than Si may be 50 at% or more. In the silicon compound phase, the proportion of Li to metal elements other than Si may be 70 at% or more, or 90 at% or more.

The silicon compound phase may include a lithium silicate as a main component. Here, the phrase "the silicon compound phase includes a lithium silicate as a main component" means that the mass percentage of lithium silicate in the silicon compound phase is 50 mass% or more.

The composition of the lithium silicate is represented, for example, by Formula: $Li_{2z}SiO_{2+z}$ ($0 < z < 2$). In view of stability, ease of preparation, lithium-ion conductivity, and the like, z may satisfy $0 < z < 1$ or $z = 1/2$. The lithium silicate satisfying $z = 1/2$ can be represented by $Li_2Si_2O_5$. The lithium silicate desirably includes $Li_2Si_2O_5$ as a main component, and $Li_2Si_2O_5$ is desirably a main component of the entire silicon compound phase. Here, the term "main component" means a component that accounts for 50 mass% or more of the mass of the entire lithium silicate or the entire silicon compound phase. $Li_2Si_2O_5$ may account for 70 mass% or more of the silicon compound phase. In a preferred embodiment of the silicon compound phase, most of the Si constitutes the lithium silicate.

The silicon compound phase may further include an element M2 in addition to Li, Si, and O. The element M2 may be at least one selected from the group consisting of Na, K, Ca, Mg, Ba, Zr, Nb, Ta, V, Ti, P, Bi, Zn, Sn, Pb, Sb, Co, F, W, Al, B, and a rare-earth element. For example, the silicon compound phase may include $Li_{2z}SiO_{2+z}$ ($0 < z < 2$) and the element M2.
The contents of the respective elements in the silicon compound phase can be determined by the following method. Furthermore, the composition of the silicate phase can be calculated from the contents of the respective elements. The contents of B, Na, K, and Al are determined by quantitative analysis in accordance with JIS R3105 (1995) (Methods for chemical analysis of borosilicate glasses). The content of Ca is determined by quantitative analysis in accordance with JIS R3101 (1995) (Methods for chemical analysis of Soda-Lime-Magnesia-Silica glasses).
The contents of the other elements are determined by the following method. First, a sample of the composite particles 10 is completely dissolved in a heated acid solution (a mixed acid of hydrofluoric acid, nitric acid, and sulfuric acid), and carbon residue in the solution is removed by filtration. Thereafter, the filtrate thus obtained is analyzed by ICP-AES to measure the spectral intensities of the respective elements. Subsequently, a calibration curve is prepared using commercially available standard solutions of the elements, and the contents of the respective elements in the composite particle 10 are calculated.
In the composite particle 10, the silicon compound phase and the Si-B-containing particles 2 can be present, and these can be quantified separately by Si-NMR.
The carbon phase includes a carbonaceous material. The carbonaceous material may be amorphous. The carbon phase may be composed of an amorphous carbonaceous material. Examples of the carbonaceous material include materials derived from pitch, amorphous carbon, carbon black, and materials derived from an organic polymer. Examples of the pitch include coal pitch and petroleum pitch, and examples of the coal pitch include coal tar pitch.
Examples of the metal-containing oxide phase include an alkali aluminate phase. An alkali aluminate phase is a phase including an alkali aluminate, which is a composite oxide containing at least one alkali metal element and aluminum (Al). An alkali metal element is an element belonging to Group 1 in the periodic table. That is, the alkali aluminate contains at least one element selected from the group consisting of Li, Na, K, Rb, Cs, and Fr. The alkali aluminate may contain at least one selected from the group consisting of Li, Na, and K. The alkali aluminate may contain at least one selected from the group consisting of Li and Na, and may contain Li. That is, the alkali aluminate may be a lithium aluminate.
The average particle diameter of the composite particles 10 may be 1 μm or more and 20 μm or less, or 1 μm or more and 10 μm or less. The average particle diameter of the composite particles 10 can be measured, for example, in the same manner as the average particle diameter of the Si-B-containing particles 2.
The composite particle 10 shown in FIG. 1 includes a coating layer 3 on the surface thereof. The coating layer 3 coats at least a portion of the surface of a particle (hereinafter also referred to as a "base particle") formed of the matrix 1 and the Si-B-containing particles 2.
The coating layer 3 contains carbon. The coating layer 3 is provided, for example, to enhance the conductivity of the composite particle 10. The coating layer 3 is composed of, for example, a conductive carbon material. The composite particle 10 can drastically enhance conductivity by including, on the surface thereof, the coating layer 3 including a conductive carbon material.
The carbon material includes, for example, at least one selected from the group consisting of a carbon compound and a carbonaceous material. Examples of the carbon compound include compounds containing carbon and hydrogen and compounds containing carbon, hydrogen, and oxygen. Examples of the carbonaceous material include materials derived from pitch, amorphous carbon, carbon black, and materials derived from an organic polymer. Examples of the pitch include coal pitch and petroleum pitch, and examples of the coal pitch include coal tar pitch.
The thickness of the coating layer 3 is preferably small so as not to substantially affect the average particle diameter of the composite particles 10. In view of ensuring conductivity and diffusibility of ions contributing to charging and discharging, the thickness of the coating layer 3 may be 1 nm or more and 200 nm or less, or 5 nm or more and 100 nm or less. The thickness of the coating layer 3 can be measured, for example, by cross-sectional observation of the negative electrode active material using an SEM.
The composite particle 10 may be free of the coating layer 3. The composite particle 10 may consist of the base particle.
The composite particle 10 may further include other components in addition to the components described above. The composite particle 10 may include other components in a percentage of more than 0 mass% and 10 mass% or less, more than 0 mass% and 5 mass% or less, more than 0 mass% and 1 mass% or less, or more than 0 mass% and 0.1 mass% or less.

(Method for Manufacturing Negative Electrode Active Material)

An example of a method for manufacturing the composite particle 10 included in the negative electrode active material according to Embodiment 1 is described.
An example of a method for manufacturing the negative electrode active material according to Embodiment 1

includes preparing a matrix and forming a composite of Si-B-containing particles and the matrix. Hereinafter, preparing a matrix is referred to as Step (i), and forming a composite of the matrix and Si-B-containing particles and sintering the composite are referred to as Step (ii). The steps are described in detail.

<Step (i)>

When the matrix is a silicon compound phase including a lithium silicate, the raw material used is a raw material mixture including a Si raw material and a Li raw material in a predetermined ratio. The raw material mixture may further include at least one selected from the group consisting of the above-described alkali metal element, a Group 2 element in the periodic table, and the element M2. The above raw material mixture is melted, and the melt is passed between metal rolls to form flakes. Thus, a lithium silicate is synthesized. Thereafter, the lithium silicate in flake form is crystallized by heat treatment in an air atmosphere at a temperature equal to or higher than the glass transition point and equal to or lower than the melting point. The lithium silicate in flake form can also be used without being crystallized. Furthermore, the lithium silicate can also be produced not by melting the mixture but by firing the mixture at a temperature equal to or lower than the melting point to cause a solid-phase reaction.

As the Si raw material, silicon oxide can be used. As the Li raw material, for example, lithium carbonate, lithium oxide, lithium hydroxide, lithium hydride, or the like can be used. These may be used alone or in combination with two or more thereof. Examples of the raw materials for the alkali metal element, the Group 2 element, and the element M2 include oxides, hydroxides, carbonate compounds, hydrides, nitrates, and sulfates of the respective elements.

An unreacted portion of the Si raw material can remain within the lithium silicate. The remaining Si raw material is dispersed as a silicon oxide phase within the lithium silicate.

<Step (ii)>

The prepared lithium silicate is blended with Si-B-containing particles to form a composite of these. The Si-B-containing particles are, for example, raw material silicon containing the element boron (B) in a predetermined amount. Composite particles (base particles) are prepared, for example, through Steps (a) to (c) below. The method for incorporating B into silicon is not particularly limited. For example, raw material silicon can be doped with B by introducing a predetermined amount of Si particles and B into a quartz crucible and heating and melting these in an argon atmosphere.

[Step (a)]

A powder of raw material silicon and a powder of the lithium silicate are mixed, for example, in a mass ratio of 20:80 to 95:5. The raw material silicon used is, for example, coarse silicon particles having an average particle diameter of several micrometers to several tens of micrometers. The coarse particles contain B in a predetermined amount.

[Step (b)]

Next, using a pulverizer such as a ball mill, the mixture of the raw material silicon and the lithium silicate is pulverized into fine particles to form a composite. Wet pulverization may be performed by adding an organic solvent to the mixture. A predetermined amount of the organic solvent may be introduced into a pulverizing vessel at once at the early stage of pulverization, or the organic solvent may be intermittently introduced into the pulverizing vessel in several portions during the pulverization process. The organic solvent serves to prevent the object to be pulverized from adhering to the inner wall of the pulverizing vessel.

Examples of the organic solvent include alcohols, ethers, fatty acids, alkanes, cycloalkanes, silicate esters, and metal alkoxides.

The raw material silicon and the lithium silicate may be separately made into fine particles and then mixed. Alternatively, silicon nanoparticles and amorphous lithium silicate nanoparticles may be prepared without using a pulverizer, and mixed. For preparation of the nanoparticles, a known method such as a vapor phase method (e.g., a plasma method) or a liquid-phase method (e.g., a liquid-phase reduction method) can be used.

[Step (c)]

The mixture is heated under pressure to, for example, 450°C or higher and 1000°C or lower, for example, in an inert gas atmosphere (e.g., an atmosphere of argon or nitrogen) to sinter the mixture. For the sintering, a sintering apparatus capable of applying pressure in an inert atmosphere, such as a hot press or a discharge plasma sintering furnace, can be used. During the sintering, the lithium silicate softens and flows to fill the gaps between the silicon particles. As a result, a dense block-shaped sintered body including the silicate phase as a sea portion and the silicon particles as

island portions can be obtained.

By pulverizing the sintered body obtained, particles (base particles) can be obtained in each of which the Si-B-containing particles 2 are dispersed in the matrix 1. Base particles having a predetermined average particle diameter can be obtained by appropriately selecting the pulverization conditions.

The sintering may be performed by rolling a powder of the mixture formed in advance into a sheet shape while heating the powder. The rolling is typically performed by passing the sheet of the mixture between two rotating rolls. By passing the sheet of the mixture through the gap between the heated rolls, the mixture can be simultaneously heated and pressed. The sheet of the mixture may be heated before or after passing between the rolls, or both before and after passing between the rolls. By performing heat treatment while rolling the mixture formed in a sheet shape, the composite particles 10 can be manufactured with high productivity.

<Step (iii)>

At least a portion of the surface of the base particle obtained may be coated with a conductive material to form the coating layer 3. The conductive material is preferably electrochemically stable, and is preferably a conductive carbon material. Examples of a method for coating at least a portion of the surface of the base particle with a conductive carbon material include a CVD method using hydrocarbon gas, such as acetylene or methane, as a raw material. Another example is a method of mixing the base particle with coal pitch, petroleum pitch, a phenolic resin, or the like and carbonizing the mixture by heating. The mixture of the base particle and the raw material of the conductive carbon material, such as coal pitch, petroleum pitch, or a phenolic resin, is heated at 700°C or higher and 950°C or lower, for example, in an inert atmosphere (e.g., an atmosphere of argon or nitrogen). Furthermore, carbon black may be adhered to the surface of the base particle. Thus, the composite particles 10 are obtained.

<Step (iv)>

A step of washing the composite particles 10 (or the base particles when Step (iii) is not performed) with an acid may further be performed. For example, by washing the composite particles with an acidic aqueous solution, a trace amount of an alkali component that can be generated upon formation of a composite of the raw material silicon and the lithium silicate can be removed. Examples of the acidic aqueous solution include aqueous solutions of inorganic acids such as hydrochloric acid, hydrofluoric acid, sulfuric acid, nitric acid, phosphoric acid, and carbonic acid and aqueous solutions of organic acids such as citric acid and acetic acid.

(Embodiment 2)

A secondary battery according to Embodiment 2 includes a negative electrode, a positive electrode, and an electrolyte. The negative electrode includes the negative electrode active material according to Embodiment 1. For example, the negative electrode includes a negative electrode mixture layer including the negative electrode active material according to Embodiment 1 and a negative electrode current collector.

FIG. 2 is a cross-sectional view schematically showing the configuration of the secondary battery according to Embodiment 2. A secondary battery 100 includes a positive electrode 23, a negative electrode 26, a separator 27, a nonaqueous electrolyte 29, and an outer casing 28. The positive electrode 23, the negative electrode 26, the nonaqueous electrolyte 29, and the separator 27 are housed in the outer casing 28. The separator 27 is disposed between the positive electrode 23 and the negative electrode 26. The positive electrode 23 and the negative electrode 26 face each other with the separator 27 interposed therebetween. The positive electrode 23 includes a positive electrode mixture layer 22 and a positive electrode current collector 21. The positive electrode mixture layer 22 is disposed between the positive electrode current collector 21 and the separator 27. The negative electrode 26 includes a negative electrode mixture layer 25 and a negative electrode current collector 24. The negative electrode mixture layer 25 is disposed between the negative electrode current collector 24 and the separator 27.

The positive electrode mixture layer 22 is composed of a positive electrode mixture. The positive electrode mixture layer 22 can be formed by applying a positive electrode slurry, prepared by dispersing the positive electrode mixture in a dispersion medium, to the surface of the positive electrode current collector 21 and drying the coating film. The dried coating film may be rolled as necessary. The positive electrode mixture layer 22 may be formed on one surface of the positive electrode current collector 21, or on both surfaces thereof.

The positive electrode mixture includes a positive electrode active material capable of occluding and releasing lithium ions. Examples of the positive electrode active material include lithium-containing transition metal oxides, lithium-containing transition metal phosphates, transition metal fluorides, polyanion materials, fluorinated polyanion materials, transition metal sulfides, transition metal oxysulfides, and transition metal oxynitrides. In particular, when a lithium-containing transition metal oxide or a lithium-containing transition metal phosphate is used as the positive electrode active

material, the battery can be manufactured at a lower cost and exhibit a higher average discharge voltage. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate. At least one selected from these positive electrode active materials can be used.

The positive electrode mixture may include a conductive additive, an ion conductor, and a binder as necessary.

The conductive additive and the ion conductor are used to reduce the resistance of the electrode. Examples of the conductive additive include carbon materials and conductive polymer compounds. Examples of carbon materials include carbon black, graphite, acetylene black, carbon nanotubes, carbon nanofibers, graphene, fullerene, and graphite oxide. Examples of conductive polymer compounds include polyaniline, polypyrrole, and polythiophene. At least one selected from these conductive additives can be used.

Examples of the ion conductor include gel electrolytes such as polymethyl methacrylate and polymethacrylic acid methyl ester, organic solid electrolytes such as polyethylene oxide, and inorganic solid electrolytes such as $Li_7La_3Zr_2O_{12}$. At least one selected from these ion conductors can be used.

The binder is used to enhance the binding properties of the materials constituting the electrode. Examples of the binder include polymer materials such as polyvinylidene fluoride, vinylidene fluoride-hexafluoropropylene copolymer, vinylidene fluoridetetrafluoroethylene copolymer, polytetrafluoroethylene, carboxymethylcellulose, polyacrylic acid, styrene-butadiene copolymer rubber, polypropylene, polyethylene, and polyimide. At least one selected from these binders can be used.

The positive electrode current collector 21 is, for example, a sheet or film formed of a metal material such as aluminum, an aluminum alloy, stainless steel, titanium, or a titanium alloy. The sheet or film may be porous or non-porous. Examples of the sheet or film include a metal foil and a metal mesh. A carbon material as a conductive auxiliary material may be applied to the surface of the positive electrode current collector 21.

The negative electrode mixture layer 25 is composed of a negative electrode mixture. The negative electrode mixture includes the negative electrode active material according to Embodiment 1. The negative electrode mixture layer 25 can be formed, for example, by applying a negative electrode slurry, prepared by dispersing the negative electrode mixture in a dispersion medium, to the surface of the negative electrode current collector 24 and drying the coating film. The dried coating film may be rolled as necessary. The negative electrode mixture layer 25 may be formed on one surface of the negative electrode current collector 24 or on both surfaces thereof. The negative electrode mixture may include a conductive additive, an ion conductor, and a binder as necessary. The materials that can be used as the conductive additive, the ion conductor, and the binder in the positive electrode mixture layer 22 can be used in the negative electrode mixture layer 25 as well. The negative electrode mixture may include a negative electrode active material other than the negative electrode active material according to Embodiment 1.

The negative electrode current collector 24 is, for example, a sheet or film formed of a metal material such as stainless steel, nickel, a nickel alloy, copper, or a copper alloy. The sheet or film may be porous or non-porous. Examples of the sheet or film include a metal foil and a metal mesh. A carbon material as a conductive auxiliary material may be applied to the surface of the negative electrode current collector 24.

The separator 27 is an electrolyte layer having lithium-ion conductivity. The material of the separator 27 may be any material through which lithium ions are allowed to pass. The material of the separator 27 can be at least one selected from the group consisting of a solid electrolyte, a gel electrolyte, an ion exchange resin membrane, a semipermeable membrane, and a porous membrane. When the separator 27 is formed of any of these materials, the safety of the secondary battery 100 can be sufficiently ensured. Examples of the solid electrolyte include sulfide solid electrolytes, such as $Li_2S-P_2S_5$, and oxide solid electrolytes, such as $Li_7La_3Zr_2O_{12}$ (LLZ). Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes formed of glass paper obtained by weaving glass fibers into a nonwoven fabric.

The positive electrode 23, the negative electrode 26, and the separator 27 may be impregnated with the nonaqueous electrolyte 29. The nonaqueous electrolyte 29 may fill the interior space of the outer casing 28. The action of the nonaqueous electrolyte 29 allows lithium ions to migrate between the positive electrode 23 and the negative electrode 26. The nonaqueous electrolyte 29 may include a nonaqueous electrolyte solution, a gel electrolyte, or an ionic liquid.

The nonaqueous electrolyte solution includes, for example, a nonaqueous solvent and a lithium salt.

The nonaqueous solvent can be a cyclic carbonate, a chain carbonate, a cyclic ether, a chain ether, a cyclic ester, a chain ester, a fluorinated solvent, a nitrile, or the like. Examples of cyclic carbonates include ethylene carbonate, propylene carbonate, and butylene carbonate. Examples of chain carbonates include dimethyl carbonate, ethyl methyl carbonate, and diethyl carbonate. Examples of cyclic ethers include tetrahydrofuran, 1,4-dioxane, and 1,3-dioxolane. Examples of chain ethers include 1,2-dimethoxyethane and 1,2-diethoxyethane. Examples of cyclic esters include $\gamma$-butyrolactone. Examples of chain esters include methyl acetate. Examples of fluorinated solvents include fluoroethylene

carbonate, methyl fluoropropionate, fluorobenzene, fluoroethylmethyl carbonate, and fluorodimethylene carbonate. Examples of nitriles include acetonitrile. At least one selected from these nonaqueous solvents can be used.

Examples of the lithium salt include lithium hexafluorophosphate ($LiPF_6$), lithium tetrafluoroborate ($LiBF_4$), lithium perchlorate ($LiClO_4$), lithium bis(fluorosulfonyl)imide (LiFSI), lithium bis(trifluoromethanesulfonyl)imide (LiTFSI), lithium bis(perfluoroethylsulfonyl)imide ($LiN(SO_2C_2F_5)_2$), $LiAsF_6$, $LiCF_3SO_3$, and lithium difluoro(oxalato)borate. At least one selected from these lithium salts can be used.

The gel electrolyte can be a material obtained by impregnating a polymer material with a nonaqueous electrolyte solution. Examples of the polymer material include polyethylene oxide, polyacrylonitrile, polyvinylidene fluoride, polymethyl methacrylate, and a polymer having an ethylene oxide bond.

Examples of a cation constituting the ionic liquid include an aliphatic chain quaternary cation, an aliphatic cyclic ammonium, and a nitrogen-containing heterocyclic aromatic cation. Examples of aliphatic chain quaternary cations include tetraalkylammonium and tetraalkylphosphonium. Examples of aliphatic cyclic ammoniums include pyrrolidinium, morpholinium, imidazolinium, tetrahydropyrimidinium, piperazinium, and piperidinium. Examples of nitrogen-containing heterocyclic aromatic cations include pyridinium and imidazolium. Examples of an anion constituting the ionic liquid include $PF_6^-$, $BF_4^-$, $SbF_6^-$, $AsF_6^-$, $SO_3CF_3^-$, $N(SO_2F)_2^-$, $N(SO_2CF_3)_2^-$, $N(SO_2C_2F_5)_2^-$, $N(SO_2CF_3)(SO_2C_4F_9)^-$, and $C(SO_2CF_3)_3^-$. The ionic liquid may contain a lithium salt.

The outer casing 28 is formed of, for example, a material obtained by laminating a metal foil such as an aluminum foil with a resin film such as a PET film. The outer casing 28 may be a container made of resin or metal.

The form of the secondary battery 100 is not limited to a stacked type. Other forms of the secondary battery 100 include a coin type, a cylindrical type, a prismatic type, a sheet type, a button type, and a flat type.

The secondary battery according to Embodiment 2 exhibits an enhanced charge capacity owing to the inclusion of the negative electrode active material according to Embodiment 1 in the negative electrode.

(Other Embodiments)

(Supplementary Description)

From the description of the above embodiments, the following techniques are disclosed.

(Techniques 1)

A negative electrode active material including a composite particle, the composite particle including:

a matrix; and
Si-B-containing particles, wherein
the Si-B-containing particles are dispersed in the matrix.

With this configuration, the charge capacity of a battery can be enhanced.

(Techniques 2)

The negative electrode active material according to Technique 1, wherein a percentage of B in the Si-B-containing particles is 0.01 mass% or more and 5.0 mass% or less. With this configuration, the charge capacity of a battery can be enhanced.

(Techniques 3)

The negative electrode active material according to Technique 1 or 2, wherein the Si-B-containing particles include crystalline silicon in which B atoms are dissolved to form a solid solution. With this configuration, the charge capacity of a battery can be enhanced.

(Techniques 4)

The negative electrode active material according to any one of Techniques 1 to 3, wherein the Si-B-containing particles include at least one selected from the group consisting of a boron oxide and elemental B. With this configuration, the charge capacity of a battery can be enhanced.

(Techniques 5)

The negative electrode active material according to any one of Techniques 1 to 4, wherein the Si-B-containing particles include an amorphous phase. With this configuration, the charge capacity of a battery can be enhanced.

(Techniques 6)

The negative electrode active material according to any one of Techniques 1 to 5, wherein an average particle diameter of the Si-B-containing particles is 1 nm or more and 1000 nm or less. With this configuration, the charge capacity of a battery can be enhanced.

(Techniques 7)

The negative electrode active material according to any one of Techniques 1 to 6, wherein the matrix is at least one selected from the group consisting of a silicon compound phase and a carbon phase. With this configuration, the charge capacity of a battery can be enhanced.

(Techniques 8)

The negative electrode active material according to Technique 7, wherein the silicon compound phase includes, as a main component, a lithium silicate including Li, Si, and O. Lithium silicate has excellent lithium-ion conductivity. With this configuration, the charge capacity of a battery can be enhanced.

(Techniques 9)

The negative electrode active material according to Technique 7 or 8, wherein the silicon compound phase further includes an element M2, and the element M2 is at least one selected from the group consisting of Na, K, Ca, Mg, Ba, Zr, Nb, Ta, V, Ti, P, Bi, Zn, Sn, Pb, Sb, Co, F, W, Al, B, and a rare-earth element. With this configuration, the charge capacity of a battery can be further enhanced.

(Techniques 10)

The negative electrode active material according to any one of Techniques 1 to 9, wherein the composite particle includes a coating layer on a surface thereof, and the coating layer includes carbon. By including the coating layer, conductivity is enhanced. With this configuration, the charge capacity of a battery can be further enhanced.

(Techniques 11)

A secondary battery including:

a negative electrode including the negative electrode active material according to any one of Techniques 1 to 10;
a positive electrode; and
an electrolyte.

With this configuration, the effect of enhancing the charge capacity can be obtained.

EXAMPLES

The present disclosure is described in more detail below with reference to an example. The following example is merely illustrative of one embodiment and is not intended to limit the present disclosure.

[Preparation of Composite Particles]

(Example 1)

Lithium carbonate and silicon dioxide were mixed in a molar ratio of $Li_2CO_3$:$SiO_2$ = 34:66, and the mixture was melted by heating at 1500°C for 5 hours in an inert gas atmosphere. The melt was passed between metal rollers to form flakes, and the product in flake form was heated at 750°C for 5 hours to produce a lithium silicate. Thereafter, the lithium

silicate was pulverized to have an average particle diameter of 10 μm.

The resulting lithium silicate having an average particle diameter of 10 μm and coarse silicon particles (average particle diameter: 10 μm) containing B at a content of 1 mass% were mixed in a mass ratio of 40:60. The mixture was placed in a pot (made of SUS, capacity: 500 mL) of a planetary ball mill (P-5, manufactured by Fritsch GmbH), 24 balls made of SUS (diameter: 20 mm) were added. The pot was closed with the lid, and the mixture was pulverized at 200 rpm for 25 hours in an inert atmosphere to form a composite of the coarse silicon particles and the lithium silicate.

Thereafter, the pulverized product was pressed at room temperature into a sheet shape having a thickness of 4 mm to 5 mm, and thus a sheet-shaped body was obtained. The shaped body was rolled by being passed between rolling rolls while being heated to 800°C, and thus a sintered body was obtained. The rolling was performed so that a pressure of 240 MPa was applied to the shaped body. The sintered body was pulverized and passed through a 40 μm mesh. In this manner, base particles were obtained in each of which Si-B-containing particles were dispersed in a matrix of a lithium silicate phase.

The base particles were mixed with coal pitch (MCP250, manufactured by JFE Chemical Corporation), and the mixture was fired at 800°C for 5 hours in an inert atmosphere to form a coating layer of conductive carbon on the surface of the base particle. At this time, the ratio of the mass of the coating layer to the total mass of the base particle and the coating layer was set to 5%. Thereafter, using a sieve, composite particles each including the coating layer and having an average particle diameter of 5 μm were obtained.

In this manner, the composite particles of Example 1 were obtained. As a result of SEM-EDX analysis of a cross section of the composite particle, the Si-B-containing particles were found to contain B at a content of 1 mass%.

(Comparative Example 1)

The composite particles of Comparative Example 1 were obtained in the same manner as in Example 1, except that coarse silicon particles free of B were used.

[X-Ray Diffraction]

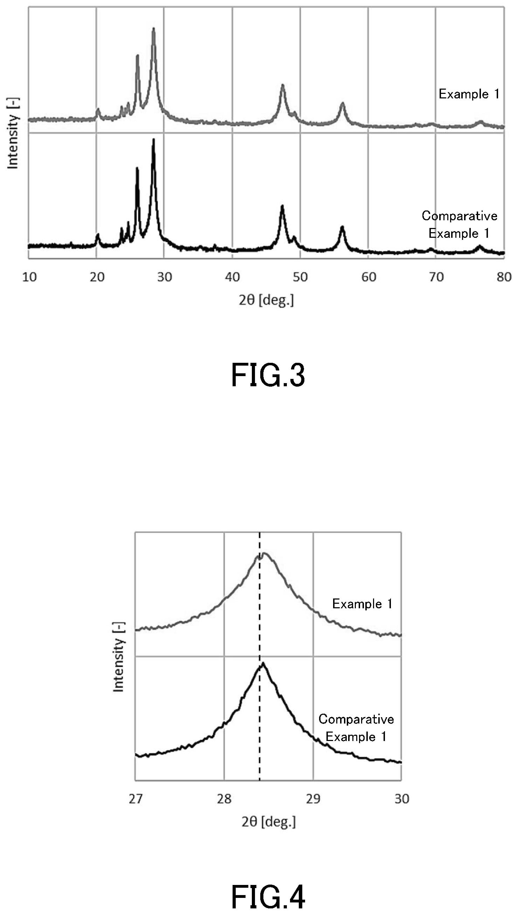

X-ray diffraction patterns of the composite particles of Example 1 and Comparative Example 1 were obtained by powder X-ray diffraction measurement. An X-ray diffractometer (MiniFlex 600, manufactured by Rigaku Corporation) was used for the measurement. Cu-Kα radiation (wavelengths of 1.5405 Å and 1.5444 Å) was used as the X-ray source. FIG. 3 is a graph showing the X-ray diffraction patterns of the composite particles of Example 1 and Comparative Example 1. FIG. 4 is a partially enlarged graph of the X-ray diffraction patterns of the composite particles of Example 1 and Comparative Example 1. In the X-ray diffraction pattern of the negative electrode active material of Example 1, a peak derived from the Si(111) plane was observed at a diffraction angle 2θ of 28.42°. In contrast, in the X-ray diffraction pattern of the negative electrode active material of Comparative Example 1, a peak derived from the Si(111) plane was observed at a diffraction angle 2θ of 28.41°. Here, it is generally known that when atoms having a smaller atomic radius than that of atoms constituting a crystal lattice are incorporated into the crystal lattice, peaks shift toward higher angles. Accordingly, from the above results, it can be confirmed that B is incorporated into the silicon crystal lattice in the composite particles of Example 1.

[Si Content]

The composite particles of Example 1 and Comparative Example 1 were analyzed by ICP and Si-NMR to measure the content of Si constituting the Si-B-containing particles in the composite particles. The measurement results are shown in Table 1.

[Volume Resistivity of Silicon Particles]

The volume resistivity (powder resistivity) of each of the coarse silicon particles containing B used in Example 1 and the coarse silicon particles used in Comparative Example 1 was measured using an automatic powder resistivity analyzer (manufactured by Nittoseiko Analytech Co., Ltd.). Table 1 shows the volume resistivity, at an apparent density of 1.5 g/cc, of the coarse silicon particles used in Example 1 and Comparative Example 1.

[Table 1]

| | Percentage of B in coarse silicon particles [mass%] | Content of Si derived from Si-B-containing particles [mass%] | Volume resistivity [Ω•cm] |
|---|---|---|---|
| Example 1 | 1 | 66 | 0.1 |

(continued)

| | Percentage of B in coarse silicon particles [mass%] | Content of Si derived from Si-B-containing particles [mass%] | Volume resistivity [Ω•cm] |
|---|---|---|---|
| Comparative Example 1 | - | 65 | 22.5 |

From Table 1, the coarse silicon particles containing B used in Example 1 exhibited a lower volume resistivity than that of the coarse silicon particles used in Comparative Example 1. That is, the composite particles of Example 1 contain silicon particles having improved electronic conductivity.

[Fabrication of Battery]

The evaluation cells of Example 1 and Comparative Example 1 were fabricated using the composite particles of Example 1 and Comparative Example 1, as follows.

(Preparation of Negative Electrode)

The composite particles and graphite were mixed in a mass ratio of 20:80, and the mixture was used as the negative electrode active material. The negative electrode active material, sodium carboxymethylcellulose (CMCNa), styrene-butadiene rubber (SBR), and lithium polyacrylate were mixed in a mass ratio of negative electrode active material:CMCNa:SBR:lithium polyacrylate = 96.5:1:1.5:1 to obtain a negative electrode mixture. Water was added to the negative electrode mixture, followed by stirring with a mixer to prepare a negative electrode slurry. Next, the negative electrode slurry was applied to the surface of a copper foil so that the mass of the negative electrode mixture was 190 g per 1 $m^2$. The coating film was dried and then rolled to prepare a negative electrode in which a negative electrode mixture layer having a density of 1.5 $g/cm^3$ was formed on both sides of the copper foil.

The negative electrode was cut into a 20 mm × 20 mm piece having a protruding portion measuring 5 mm × 5 mm. The negative electrode mixture layer on the protruding portion was peeled off to expose the copper foil. Subsequently, a negative electrode tab lead was connected to the exposed portion of the copper foil, and a predetermined region of the outer periphery of the negative electrode tab lead was covered with an insulating film.

(Preparation of Counter Electrode)

A tab having a small piece of Ni mesh welded to its end portion was fabricated. The tab was cut to a predetermined size, and the mesh portion was pressed against a 300 μm-thick lithium metal foil to prepare a counter electrode.

(Preparation of Nonaqueous Electrolyte)

$LiPF_6$ was dissolved in a solvent mixture of ethylene carbonate (EC), ethyl methyl carbonate (EMC), and dimethyl carbonate (DMC) mixed in a volume ratio of EC:EMC:DMC = 4:1:15 to prepare a nonaqueous electrolyte. The $LiPF_6$ concentration was set to 1.3 mol/L.

(Fabrication of Cell)

An evaluation cell of the negative-electrode-limited type was fabricated using the above negative electrode and two counter electrodes, as follows. The cell fabrication was performed in a dry air atmosphere with a dew point of -60°C or lower. The negative electrode was sandwiched between the pair of counter electrodes so that the negative electrode mixture layer and each lithium metal foil faced each other with a separator interposed therebetween, whereby an electrode group was prepared. Next, an Al laminate film cut to a rectangular shape was folded in half, and the two edges along the long sides were heat-sealed to form a tubular shape. Subsequently, the electrode group prepared was inserted into the tube through one short-side end of the Al laminate film. The end face of the Al laminate film was aligned with the insulating film of each tab lead, followed by heat-sealing. Next, 0.3 $cm^3$ of an electrolyte solution was injected through the unsealed short-side end of the tube. After the injection, the electrode group was left to stand for 3 minutes under a reduced pressure of 0.02 MPa and then returned to atmospheric pressure. This operation was performed twice to impregnate the negative electrode mixture layer with the nonaqueous electrolyte. Finally, the end face of the tubular Al laminate film through which the electrolyte solution was injected was heat-sealed under reduced pressure. Thus, the evaluation cell was obtained.

[Evaluation of Battery]

The evaluation cells of Example 1 and Comparative Example 1 were evaluated for initial charge and discharge characteristics and cycle characteristics as follows. The evaluation results are shown in Table 2.

At an ambient temperature of 25°C, a constant-current charge was performed at a current value of 0.1C until the voltage reached 1.0 V. Subsequently, a constant-current discharge was performed at a current value of 0.1C until the cell voltage reached 0.005 V. Thus, the evaluation cells of Example 1 and Comparative Example 1 were evaluated for initial charge and discharge capacity. The above charge and discharge were defined as one cycle, and 100 cycles were performed. The capacity retention rate was calculated by the following formula.

Capacity retention rate [%] = (discharge capacity at 100th cycle/discharge capacity at 1st cycle) $\times$ 100

[Table 2]

| | Charge capacity [mAh/g] | Discharge capacity [mAh/g] | Capacity retention rate [%] |
|---|---|---|---|
| Example 1 | 2077 | 1854 | 93.0 |
| Comparative Example 1 | 1967 | 1780 | 92.4 |

(Discussion)

The battery of Example 1 exhibited higher charge capacity and discharge capacity than those of Comparative Example 1. This is presumably because the inclusion of B in the silicon particles improved electronic conductivity. Accordingly, by using the negative electrode active material of the present disclosure, the charge and discharge capacity of the battery was enhanced.

INDUSTRIAL APPLICABILITY

The technique of the present disclosure can be used in batteries such as lithium-ion secondary batteries.

## Claims

**1.** A negative electrode active material comprising a composite particle, the composite particle comprising:

a matrix; and
Si-B-containing particles, wherein
the Si-B-containing particles are dispersed in the matrix.

**2.** The negative electrode active material according to claim 1, wherein
a percentage of B in the Si-B-containing particles is 0.01 mass% or more and 5.0 mass% or less.

**3.** The negative electrode active material according to claim 1, wherein
the Si-B-containing particles comprise crystalline silicon in which B atoms are dissolved to form a solid solution.

**4.** The negative electrode active material according to claim 1, wherein
the Si-B-containing particles comprise at least one selected from the group consisting of a boron oxide and elemental B.

**5.** The negative electrode active material according to claim 1, wherein
the Si-B-containing particles comprise an amorphous phase.

**6.** The negative electrode active material according to claim 1, wherein
an average particle diameter of the Si-B-containing particles is 1 nm or more and 1000 nm or less.

**7.** The negative electrode active material according to claim 1, wherein
the matrix is at least one selected from the group consisting of a silicon compound phase and a carbon phase.

**8.** The negative electrode active material according to claim 7, wherein the silicon compound phase comprises, as a main component, a lithium silicate comprising Li, Si, and O.

**9.** The negative electrode active material according to claim 8, wherein

the silicon compound phase further comprises an element M2, and
the element M2 is at least one selected from the group consisting of Na, K, Ca, Mg, Ba, Zr, Nb, Ta, V, Ti, P, Bi, Zn, Sn, Pb, Sb, Co, F, W, Al, B, and a rare-earth element.

**10.** The negative electrode active material according to claim 1, wherein

the composite particle comprises a coating layer on a surface thereof, and
the coating layer comprises carbon.

**11.** A secondary battery comprising:

a negative electrode comprising the negative electrode active material according to any one of claims 1 to 10;
a positive electrode; and
an electrolyte.

10
2
1
3

FIG.1

100
23
27
21
22
28
29
24
25
26

FIG.2

Intensity [-]
Example 1
Comparative Example 1
10
20
30
40
50
60
70
80
2θ [deg.]

FIG.3

Intensity [-]
Example 1
Comparative Example 1
27
28
29
30
2θ [deg.]

FIG.4

# INTERNATIONAL SEARCH REPORT

International application No.
**PCT/JP2024/037640**

**A. CLASSIFICATION OF SUBJECT MATTER**

***H01M 4/38***(2006.01)i; ***H01M 4/134***(2010.01)i; ***H01M 4/36***(2006.01)i; ***H01M 4/58***(2010.01)i
FI: H01M4/38 Z; H01M4/134; H01M4/36 B; H01M4/36 C; H01M4/58

According to International Patent Classification (IPC) or to both national classification and IPC

**B. FIELDS SEARCHED**

Minimum documentation searched (classification system followed by classification symbols)

H01M4/38; H01M4/134; H01M4/36; H01M4/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-506818 A (ORANGE POWER LTD.) 08 March 2018 (2018-03-08) paragraphs [0024]-[0025], fig. 1A-1D | 1-2, 4, 6-7, 11 |
| A | entire text, all drawings | 3, 5, 8-10 |
| X | JP 2002-42788 A (SANYO ELECTRIC CO., LTD.) 08 February 2002 (2002-02-08) paragraphs [0045]-[0050] | 1, 7, 11 |
| P, X | CN 117878276 A (BOSAILISI NANJING CO., LTD.) 12 April 2024 (2024-04-12) paragraph [0018] | 1, 4, 6-7, 10-11 |

☐ Further documents are listed in the continuation of Box C.

☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/037640**

| Patent document cited in search report | Publication date (day/month/year) | Patent family member(s) | Publication date (day/month/year) |
|---|---|---|---|
| JP 2018-506818 A | 08 March 2018 | US 2017/0352883 A1 paragraphs [0030]-[0031], fig. 1A-1D<br>WO 2016/108645 A1<br>EP 3242349 A1<br>KR 10-1614016 B1<br>CN 107210433 A | |
| JP 2002-42788 A | 08 February 2002 | (Family: none) | |
| CN 117878276 A | 12 April 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021153078 A